(19) **Europäisches Patentamt**

**European Patent Office**

**Office européen des brevets**

(11) **EP 0 997 502 A1**

(12) **EUROPEAN PATENT APPLICATION**

(43) Date of publication:
**03.05.2000 Bulletin 2000/18**

(51) Int. Cl.⁷: **C09D 7/00**, C08L 5/14,
C08L 1/28

(21) Application number: **98120191.6**

(22) Date of filing: **30.10.1998**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **HERCULES INCORPORATED**<br>**Wilmington Delaware 19894-0001 (US)**<br><br>(72) Inventors:<br>• **Kroon, Gijsbert**<br>**3371 BW Hardinxveld-Giessendam (NL)** | • **Sau, Arjun C.**<br>**Newark, Delaware 19711 (US)**<br><br>(74) Representative:<br>**Best, Michael, Dr. et al**<br>**Lederer, Keller & Riederer**<br>**Patentanwälte**<br>**Prinzregentenstrasse 16**<br>**80538 München (DE)** |

(54) **Combinations of associative thickeners and aqueous protective coating compositions**

(57) The present invention provides thickener compositions comprising a combination of associative thickeners, wherein at least one associative thickener is a hydrophobically modified cellulose derivative or a hydrophobically modified guar derivative and is present in the combination of associative thickeners in a relative amount of at least 70% by weight or in a relative amount of not more than 30% by weight, based on the weight of the combination of associative thickeners.

EP 0 997 502 A1

**Description**

The invention relates to combinations of associative thickeners and to aqueous protective coating compositions containing such a combination. At least one associative thickener of the combination of associative thickeners is a hydrophobically modified cellulose derivative or guar derivative and is present in the combination of associative thickeners in a relative amount of at least 70% by weight or in a relative amount of not more than 30% by weight based on the weight of the combination of associative thickeners.

The aqueous protective coating compositions containing the combination of associative thickeners of the present invention provide an excellent leneta levelling, an excellent brush levelling, good sag resistance and an adjustable ICI viscosity.

Associative thickeners, which generally are water soluble polymers, are widely used as additives in water-based systems. Thickeners increase and maintain the viscosity at required levels under specific processing conditions and end-use situations. In particular, thickeners are useful in all kinds of coatings such as decorative and protective coatings and in paper coatings but also in cosmetics and personal care items, detergents, pharmaceuticals, adhesives and sealants, agricultural formulations and petroleum drilling fluids.

Associative thickeners are used as rheology modifiers for water-based protective coating compositions.

Water-based protective coating compositions are commonly known as latex paints or dispersion paints and have been known for a considerable number of years. The adjustment of the rheology properties of such an aqueous protective coating composition is a challenging field, since the coating composition needs not only to provide good levelling (such as leneta levelling and brush levelling) and an excellent sag resistance, but rather the coating compositions should also have an ICI viscosity which is neither too low nor too high in order to allow an easy application.

It is well known to the person skilled in the art that various thickening agents can be added to aqueous protective coating compositions in order to change the rheology properties of the composition. Many compounds e.g. starch, methyl cellulose, hydroxyethyl cellulose, treated bentonids, hydroxyalkyl guar and the like as well as a number of synthetic thickeners have been used as thickening agents in the past. However, most of these known thickening agents do not provide a sufficiently good leneta levelling, brush levelling or sag resistance and those thickeners which have a reasonable leneta levelling often do not have a satisfactory ICI viscosity.

European patent application EP-A-0 566 911 discloses aqueous protective coating compositions containing an associative thickener having a molecular weight of 10 000 to 300 000. The associative thickener is preferably a hydrophobically modified cellulose derivative, e.g. hydrophobically modified hydroxyethyl cellulose or hydrophobically modified ethylhydroxyethyl cellulose or a hydrophobically modified guar derivative. While these thickeners disclosed in EP-A-0 566 911 provide aqueous protective coating compositions having excellent leneta levelling, excellent brush levelling and excellent sag resistance, it is sometimes difficult to adjust the ICI viscosity of the aqueous protective coating composition to a desired value.

US-A 5,002,985 discloses a flat or semiflat water paint composition having improved rheology and performance properties. The paint compositions contain a combination of a water soluble nonionic cellulose ether and an associative polyurethane thickener. While US-A 5,002,985 broadly discloses that the cellulose derivatives may additionally contain a minor amount of hydrocarbon substituents having 4 to 20 carbon atoms, hydrophobically modified cellulose derivatives are not exemplified. The thickener combinations disclosed in US-A 5,002,985 contain the cellulose ether and the associative polyurethane thickener in a weight ratio of 2:8 to 8:2. The paint compositions disclosed in US-A 5,002,985 have a pigment volume concentration of at least 30%, exemplified is a pigment volume concentration of 46%.

US-A 5,002,985 does not refer to problems which sometimes occur when using hydrophobically modified cellulose derivatives which provide an excellent leneta levelling but not a satisfactory ICI viscosity.

If a skilled person uses combinations of associative thickeners containing a hydrophobically modified cellulose derivative or guar derivative such as a hydrophobically modified cellulose derivative or guar derivative disclosed in EP-A 0 566 911, the leneta levelling usually will be significantly reduced (while the ICI viscosity might be improved depending on the ICI viscosity of the other thickener components of the combination of associative thickeners.

It is therefore an object of the present invention to provide aqueous protective coating compositions which do not show the problems associated with the prior art compositions, which have an excellent balance of properties and in particular have excellent leneta levelling, brush levelling and sag resistance similar to the aqueous protective coating compositions disclosed in EP-A-0 566 911 but in addition also have a satisfying ICI viscosity.

According to the present invention, it was unexpectedly found that a combination of associative thickeners which contains at least one hydrophobically modified cellulose derivative or guar derivative as disclosed in EP-A-0 566 911 in an amount of not more than 30% by weight or in an amount of at least 70% by weight based on the total weight of the composition can provide excellent levelling and sag resistance properties and additionally has acceptable ICI viscosity. If the hydrophobically modified cellulose derivative or guar derivative is present in the combination of associative thickeners in a relative amount of more than 30 to less than 70% the ICI viscosity of the aqueous protective coating composition might be acceptable, however, the levelling properties of the composition are no longer satisfactory.

The present invention therefore provides a thickener composition comprising a combination of associative thickeners wherein at least one associative thickener is a hydrophobically modified cellulose derivative or a hydrophobically modified guar derivative and is present in the combination of associative thickeners in a relative amount of at least 70% by weight or in a relative amount of not more than 30% by weight, based on the weight of the combination of associative thickeners.

The present invention furthermore provides aqueous protective coating compositions containing such a combination of associative thickeners.

The present invention furthermore provides the use of such an associative thickener for the preparation of a thickener composition as defined above.

Furthermore, the present invention provides products coated with an aqueous protective coating composition as defined above.

The combination of associative thickeners of the present invention contains at least one hydrophobically modified cellulose derivative or a hydrophobically modified guar derivative. The hydrophobically modified guar derivative is preferably a hydrophobically modified guar derivative as disclosed in EP-A 0 566 911, such as hydrophobically modified guar, hydroxyethyl guar, methyl guar, hydroxypropyl guar, carboxymethyl guar or mixed ethers thereof.

Preferably, the combination of associative thickeners contains at least one hydrophobically modified cellulose derivative. In the following, it is only referred to the hydrophobically modified cellulose derivative, however, the provisions are also valid for a hydrophobically modified guar derivative.

The cellulose derivative is preferably a hydroxyethyl cellulose, a methyl cellulose, a methylhydroxypropyl cellulose, a carboxymethyl cellulose, a carboxymethylhydroxyethyl cellulose, a hydroxypropyl cellulose, a methylhydroxyethyl cellulose or an ethylhydroxyethyl cellulose. Particularly preferred are hydroxyethyl cellulose and ethylhydroxyethyl cellulose. The hydrophobe for the hydrophobe modification of the cellulose derivative is usually a $C_{10}$-$C_{24}$ alkyl or alkylaryl residue. Particularly preferred are $C_{12}$-$C_{18}$ alkyl and alkylaryl residues. The aryl residue is preferably a phenyl residue. Preferred hydrophobe residues are disclosed in EP-A 0 566 911.

The hydroxyethyl molecular substitution of the above mentioned cellulose derivatives containing hydroxyethyl groups is usually in the range of 2.5 to 5.0, preferably in a range of 2.5 to 4.5. The hydrophobe wt.-% substitution of the hydrophobically modified cellulose derivative is generally 0.2 to 5.0, preferably 0.4 to 2.0.

The preferred hydrophobically modified cellulose derivatives and guar derivatives are those disclosed in EP-A 566 911. The weight averaged molecular weight of the cellulose derivative (after modification) is usually from 10 000 to 300 000, preferably from 10 000 to 100 000 and in particular from 10 000 to 60 000.

The hydrophobically modified cellulose derivative is preferably combined with a synthetic thickener such as an associative polyurethane thickener or particularly preferred with a hydrophobically modified polyethylene glycol such as the polyethylene glycols disclosed in US-A 5,574,127, in particular hydrophobically modified poly(acetal-polyethers). Preferred associative polyurethane thickeners are widely commercially available and particularly preferred are those hydrophobically modified ethoxylated urethane block copolymers disclosed in US-A 4,079,028, US-A 4,155,892 and US-A 5,281,654. The combination of associative thickeners according to the invention usually contains only two associative thickeners, namely a hydrophobically modified cellulose derivative as disclosed in EP-A 0 566 911 in combination with a hydrophobically modified polyethylene glycol as disclosed in US-A 5,574,127 or in combination with a polyurethane thickener as disclosed in US-A 4,079,028, US-A 4,155,892 and US-A 5,281,654.

The combination of associative thickeners according to the invention is usually provided as an aqueous solution containing about 20% by weight of associative thickener. Alternatively, it is possible to provide the combination of associative thickeners as a physical mixture for either solving in water or for directly adding to an aqueous protective coating composition. It is, of course, also possible to provide a kit of parts containing both associative thickeners separately packed with the instruction to mix these associative thickeners prior to or during application. Such kits of parts are also enclosed within this invention.

The combination of associative thickeners contains not more than 30 wt.-% of the hydrophobically modified cellulose derivative or not less than 70 wt.-% of the hydrophobically modified cellulose derivative based on the combination of associative thickeners. If the relative amount of the hydrophobically modified cellulose derivative is outside of the above ranges, the leneta levelling of an aqueous protective coating composition containing the combination of associative thickeners usually is not sufficient. Even at the borderline values of 30% hydrophobically modified cellulose derivative and 70% hydrophobically modified cellulose derivative, sometimes the leneta levelling is already reduced. Therefore, preferably, the combination of associative thickeners according to the invention contains less than 30% or more than 70%, preferably 25% or less or 75% or more and most preferably 20% or less or 80% or more of the hydrophobically modified cellulose derivative. For example, if, as in a preferred embodiment, two associative thickeners A and B are present in the combination of associative thickeners, the following equations should be observed:

$$\frac{A}{B} \leq \frac{30}{70} \text{ or } \frac{A}{B} \geq \frac{70}{30}$$

preferably

$$\frac{A}{B} < \frac{30}{70} \text{ or } \frac{A}{B} > \frac{70}{30}$$

more preferably

$$\frac{A}{B} \leq \frac{25}{75} \text{ or } \frac{A}{B} \geq \frac{75}{25}$$

most preferably

$$\frac{A}{B} \leq \frac{20}{80} \text{ or } \frac{A}{B} \geq \frac{80}{20}.$$

In the combination of associative thickeners each associative thickener is usually present in an amount of at least 2%, preferably an amount of at least 5%, most preferably in an amount of at least 10%. Thus, in a combination of associative thickeners consisting of two associative thickeners, e.g. one thickener is present in an amount of 2% and the other thickener is present in an amount of 98%, more preferably one thickener is present in an amount of 5% and the other thickener is present in an amount of 95%, most preferably one thickener is present in an amount of 10% and the other thickener is present in an amount of 90% or one thickener is present in an amount of 20% and the other thickener is present in an amount of 80%.

The combination of associative thickeners can be used for improving the rheology properties of all kinds of aqueous protective coating compositions. Such aqueous protective coating compositions can contain pigments or can be free of pigments. Thus, in a preferred embodiment, the aqueous protective coating composition is a pigment/extender-free coating composition. Such a pigment-free composition, of course, has a pigment volume ratio defined as

$$PVC = \frac{\text{volume of pigments, extenders, etc.}}{\text{volume of pigments, extenders, etc.} + \text{volume of binder}} = 0$$

Usually, the aqueous protective coating compositions according to the present invention have a pigment volume ratio (PVC) of 55% or less, preferably of 45% or less, e.g. less than 30%.

The binder of the aqueous protective coating compositions of the present invention usually are polymeric dispersions (latex) made by radical polymerizations through emulsion polymerization process. In the emulsion polymerization process ethylenically unsaturated monomers are used such as acrylic acid, methacrylic acid, butylacrylate, methylacrylate, acrylic esters, styrene and mixtures thereof. Other monomers which can be used for preparing such polymeric dispersions are vinylesters, vinylidene halides, N-vinylpyrolidone, ethylene, $C_3$ or greater alpha-olefins, allyl amines, allyl esters of saturated monocarboxylic acids and amides thereof and mixtures thereof. Furthermore, vinylformate, vinylacetate, vinylpropionate, vinylversatate, etc. can be used. In a particularly preferred embodiment, the aqueous protective coating compositions of the present invention are based on acrylic latexes, styrene acrylic latexes and vinylacetate-acrylates.

The aqueous protective coating compositions of the invention can be applied by all known application methods, preferably by brush, roller, spray, dip coating, curtain coating, etc.

The following examples and reference examples are illustrative only.

Reference example 1

100 parts by weight of water, 21.5 parts by weight of propylene glycol, 2 parts by weight of AMP 90 (aminopropanol/pH-stabilizer/dispersant), 6 parts by weight Dispex GA 40 (dispersant), 5 parts by weight Dehydran 1293 (defoamer), hydrophobically modified cellulose thickener as shown in the examples, 160 parts by weight Tioxide R-HD2 (titanium dioxide) and 170 parts by weight Omyacarb Extra CL (calcium carbonate) were dispersed for 15 minutes at 4000 rpm. Then 6 parts by weight Surfynol 104E (defoamer/stabilizer which is a 50% nonionic surfactant in ethylene glycol), 390 parts by weight Neocryl XK-90 (binder/styrene-acrylic latex), ammonia up to a pH-value of 9.4, 9 parts by weight Dehydran 1293, 60.7 parts by weight diethylene glycol, the second thickener of the combination of associative thickeners as defined in the examples and 30.7 parts by weight of water were mixed to provide egg shell paint No. 1.

Reference example 2

29.6 parts by weight propylene glycol, 55.6 parts by weight water, 2.0 parts by weight Calgon N (sodium hexamethaphosphate), 2.0 parts by weight Byk 154 (acrylic-based anionic dispersant), 0.8 parts by weight CA 24 (chloroacetamide preservative), 4.0 parts by weight Byk 026 (defoamer), 0.8 parts by weight ammonia, hydrophobically modified cellulose derivative as shown in the examples and 211.0 parts by weight Tioxide R-HD2 were dispersed for 15 minutes at 4000 rpm. Then 553.1 parts by weight Primal HG 74 D (styrene-acrylic latex, based on styrene-2-ethylhexylacrylate), 34.6 parts by weight Texanol (ester alcohol, coalescing agent), 16.5 parts by weight Dowanol PM (glycolether based cosolvent), 1.0 parts by weight Byk 026, 64.0 parts by weight water and the second associative thickener of the combination of associative thickeners was added to provide gloss paint No. 2.

Reference example 3

73.3 parts by weight water, 21.5 parts by weight propylene glycol, 2 parts by weight AMP 90, 2 parts by weight Calgon N, 2 parts by weight Byk 154, 5 parts by weight Dehydran 1293, hydrophobically modified cellulose derivative as shown in the examples, 190 parts by weight Tioxide R-HD2 and 90 parts by weight Omyacarb Extra CL were dispersed for 15 minutes at 4000 rpm. Then 6 parts by weight Surfynol 104E (surfactant), 472 parts by weight Neocryl XK-90, ammonia up to a pH-value of 9.4, 9 parts by weight Dehydran 1293, 60.7 parts by weight diethylene glycol, 7 parts by weight Byk 154, the second associative thickener as shown in the examples and 22.4 parts by weight of water were added to produce semi-gloss paint No. 3.

In the following examples, the following thickeners are employed:

Thickener A = hydrophobically modified hydroxyethyl cellulose having a hydroxyethyl MS of 3.7, being hydrophobically modified by 1.5 wt.-% $C_{16}$ and having a molecular weight $M_W$ = 52 000 (thickener according to EP-A 0 566 911)

Thickener B = hydrophobically modified polyethylene glycol having a $C_{12}$ hydrophobe substitution of 1.4 wt.-% and a molecular weight $M_W$ = 25 000; prepared according to US-A 5,574,127

Thickener C = commercial product Primal RM 2020, Rhom and Has, associative polyurethane thickener

Thickener D = commercial thickener DSX 2000, Henkel, polyurethane thickener

Thickener E = hydrophobically modified hydroxyethyl cellulose having a hydroxyethyl MS of 3.5, being hydrophobically modified by 4.1 wt.-% $C_{12}$ and having a molecular weight $M_W$ = 56 000, (thickener according to EP-A 0 566 911)

Thickener F = hydrophobically modified hydroxyethyl cellulose having a hydroxyethyl MS of 3.6, being hydrophobically modified by 0.7 wt.-% $C_{16}$ and having a molecular weight $M_W$ = 240 000 (thickener according to EP-A 0 566 911).

In the following examples, aqueous protective coating compositions as shown in tables 1 to 4 have been employed and the levelling, the sag resistance and viscosity properties have been measured.

In the tables, the ICI viscosity is the viscosity determined with ICI cone and plate viscosimeter which measures the viscosity at a fixed shear rate of 10 000 $s^{-1}$. The viscosity can be read directed from the scale in poise. This viscosity indicates the behavior of the composition under application by brush (or in other words the "brush drag"), roller and spraying, so under high shear.

The Stormer viscosity is measured with a digital stormer viscosimeter from which the reading indicates directly the viscosity in Krebs Unit (KUs). This viscosity is indicating the can viscosity.

For spray application, the sag resistance is measured by spraying the paint including the combination of thickeners onto a vertical substrate as thick as possible so at the limit of sagging. Then the layer thickness is measured. The layer thickness depends on how the structural recovery of the paint develops in time and to what level. It is a rheology phenomenon and has two components in it, the visco elasticity and time dependency. This is influenced by the structure of the polymer coil in solution.

Generally, sag resistance is measured by applying the paint with an applicator bar having different opening sizes in the range of 50 to 300 microns. The substrate with applied paint varying in layer thickness is then put vertical and sag resistance is defined as the maximum layer thickness at which sagging is not yet occurring.

In the examples, %TE refers to thickening efficiency and is the amount of associative thickener (active, dry basis) required to achieve the indicated Stormer viscosity. Thus, %TE is the amount of (active) associative thickener present in the aqueous composition (in wt.-% based on the complete weight of the aqueous composition) and this amount was adjusted so that all compositions had the same Stormer viscosity of about 100 KU.

Example 1

In example 1, the gloss paint No. 2 of reference example 2 is prepared with thickener A, thickener B and various mixtures of thickeners A and B as shown in table 1. The physical properties of the compositions are shown in table 1. It can be seen that thickener A provides excellent leneta levelling but quite a low ICI viscosity while thickener B also provides an excellent leneta levelling but an ICI viscosity which is very high and for some applications maybe too high. Combinations of thickener A and thickener B provide an adjustable ICI viscosity, however, the leneta levelling and the brush levelling for most combinations of thickener A and thickener B are not satisfactory. Thus, only compositions having an A/B ratio of less than 30/70 or of more than 70/30 provide aqueous compositions having an excellent leneta levelling, brush levelling and ICI viscosity.

Table 1

| A/B | % TE (wt.-%) | Stormer Viscosity (KU) | ICI visc. (mPas) | Levelling Leneta | Levelling Brush | Sag resistance (microns wet) |
|---|---|---|---|---|---|---|
| only A | 0.67 | 97 | 55 | 10 | 6 | 225 |
| only B | 1.41 | 100 | 370 | 10 | 7 | 100 |
| 10/90 | 1.27 | 100 | 325 | 10 | 5 | 175 |
| 20/80 | 1.16 | 101 | 285 | 10 | 4 | 225 |
| 30/70 | 0.98 | 99 | 220 | 7 | 3 | 275 |
| 40/60 | 0.88 | 99 | 185 | 5 | 3 | 300 |
| 50/50 | 0.85 | 101 | 165 | 4 | 3 | 300 |
| 60/40 | 0.8 | 101 | 140 | 3 | 3 | 300 |
| 70/30 | 0.77 | 103 | 120 | 3 | 5 | 300 |
| 80/20 | 0.74 | 100 | 100 | 9 | 6 | 225 |
| 90/10 | 0.67 | 97 | 70 | 9 | 6 | 225 |

Example 2

Example 1 was repeated with the semi-gloss paint No. 3 prepared according to reference example 3. The results of this example are summarized in table 2 below.

It can be seen that thickener A and thickener B both individually provide excellent leneta and brush levelling, however, the ICI viscosity provided by thickener A is quite low and the ICI viscosity provided by thickener B is too high for several applications.

Again, by combining thickener A and thickener B, aqueous protective coating compositions having an adjustable ICI viscosity can be achieved but the leneta and brush levelling is only satisfactory, if the ratio of A to B is less than 30/70 or 70/30 or more.

Table 2

| A/B | % TE (wt.-%) | Stormer Viscosity (KU) | ICI visc. (mPas) | Levelling Leneta | Levelling Brush | Sag resistance (microns wet) |
|---|---|---|---|---|---|---|
| only A | 0.69 | 100 | 110 | 10 | 6 | 175 |

Table 2 (continued)

| A/B | % TE (wt.-%) | Stormer Viscosity (KU) | ICI visc. (mPas) | Levelling Leneta | Levelling Brush | Sag resistance (microns wet) |
|---|---|---|---|---|---|---|
| only B | 2.01 | 99 | 430 | 10 | 7 | 125 |
| 10/90 | 1.84 | 97 | 390 | 10 | 7 | 150 |
| 20/80 | 1.44 | 97 | 315 | 10 | 6 | 175 |
| 30/70 | 1.32 | 97 | 250 | 8 | 5 | 225 |
| 40/60 | 1.14 | 97 | 210 | 8 | 5 | 225 |
| 50/50 | 1.01 | 98 | 180 | 8 | 5 | 250 |
| 60/40 | 0.97 | 98 | 165 | 8 | 5 | 250 |
| 70/30 | 0.94 | 102 | 155 | 9 | 6 | 250 |
| 80/20 | 0.83 | 99 | 135 | 10 | 6 | 175 |
| 90/10 | 0.75 | 100 | 110 | 10 | 6 | 175 |

Example 3

A semi-gloss emulsion paint No. 3 according to reference example No. 3 is prepared with various thickeners and combinations of thickeners as shown in table 3. The physical properties of the paints are shown in table 3. It can be seen that the individual thickeners provide excellent leneta levelling but not always a satisfactory ICI viscosity. Combinations of these thickeners provide an adjustable ICI viscosity, however, the leneta levelling and the brush levelling for most combinations of the thickeners are not satisfactory. Only compositions according to the present invention have an excellent leneta levelling, brush levelling and ICI viscosity.

Table 3

| Thickener | % TE (wt.-%) | Stormer Viscosity (KU) | ICI visc. (mPas) | Levelling Leneta | Levelling Brush | Sag resistance (microns wet) |
|---|---|---|---|---|---|---|
| only A | 0.64 | 101 | 105 | 10 | 7 | 175 |
| only C | 1.89 | 98 | 395 | 10 | 7 | 125 |
| only D | 2.12 | 99 | 410 | 10 | 6 | 125 |
| A/C | | | | | | |
| 20/80 | 1.49 | 97 | 295 | 10 | 6 | 175 |
| 40/60 | 1.01 | 99 | 205 | 6 | 4 | 275 |
| 80/20 | 0.81 | 101 | 130 | 10 | 6 | 175 |
| A/D | | | | | | |
| 20/80 | 1.67 | 98 | 305 | 10 | 7 | 175 |
| 40/60 | 1.17 | 99 | 210 | 7 | 4 | 275 |
| 80/20 | 0.87 | 101 | 140 | 10 | 6 | 175 |
| only E | 1.06 | 99 | 100 | 10 | 7 | 175 |
| only C | 1.89 | 98 | 395 | 10 | 7 | 125 |
| E/C | | | | | | |
| 20/80 | 1.34 | 97 | 325 | 10 | 6 | 175 |
| 40/60 | 1.13 | 98 | 240 | 6 | 3 | 300 |
| 80/20 | 0.99 | 101 | 170 | 10 | 6 | 150 |
| only F | 0.59 | 98 | 100 | 10 | 6 | 200 |
| F/C | | | | | | |
| 20/80 | 1.21 | 97 | 250 | 10 | 6 | 175 |
| 50/50 | 0.78 | 101 | 180 | 4 | 3 | 300 |

Example 4

The egg shell paint No. 1 according to reference example 1 was prepared with thickener A, thickener C and various mixtures of thickeners A and C as shown in table 4. The physical properties of the paints are shown in table 4 below. It can be seen that thickener A provides an excellent leneta levelling but quite a low ICI viscosity while thickener B also provides an excellent leneta levelling but a very high ICI viscosity. Combinations of thickener A and thickener C provide an adjustable ICI viscosity, however, the leneta levelling and the brush levelling are only satisfactory, if the combinations meet the requirements of the present invention.

Table 4

| A/C | % TE (wt.-%) | Stormer Viscosity (KU) | ICI visc. (mPas) | Levelling Leneta | Levelling Brush | Sag resistance (microns wet) |
|---|---|---|---|---|---|---|
| only A | 0.74 | 99 | 130 | 10 | 7 | 175 |
| only C | 2.01 | 98 | 410 | 10 | 8 | 100 |
| 20/80 | 1.67 | 96 | 315 | 10 | 7 | 175 |
| 40/60 | 1.22 | 100 | 220 | 5 | 3 | 300 |
| 80/20 | 0.94 | 99 | 140 | 10 | 6 | 150 |

**Claims**

1. Thickener compositions comprising a combination of associative thickeners, wherein at least one associative thickener is a hydrophobically modified cellulose derivative or a hydrophobically modified guar derivative and is present in the combination of associative thickeners in a relative amount of at least 70% by weight or in a relative amount of not more than 30% by weight, based on the weight of the combination of associative thickeners.

2. Thickener composition according to claim 1, wherein the combination of associative thickeners contains at least one hydrophobically modified cellulose derivative.

3. Thickener composition according to claim 2, wherein the cellulose derivative is a hydroxyethyl cellulose, methyl cellulose, methylhydroxypropyl cellulose, carboxymethyl cellulose, carboxymethylhydroxyethyl cellulose, hydroxypropyl cellulose, methylhydroxyethyl cellulose or ethylhydroxyethyl cellulose.

4. Thickener composition according to claim 3, wherein the hydrophobically modified cellulose derivative is a hydrophobically modified hydroxyethyl cellulose with a hydroxyethyl molecular substitution of 2.5-5.0 and a hydrophobe weight percent substitution of 0.2-5.0 whereby the hydrophobe is selected from $C_{10}$-$C_{24}$ alkyl and $C_{10}$-$C_{24}$ alkylaryl.

5. Thickener composition according to claim 4, wherein the hydrophobe is selected from $C_{12}$-$C_{18}$ alkyl and $C_{12}$-$C_{18}$ alkylaryl.

6. Thickener composition according to claim 5, wherein the hydrophobically modified hydroxyethyl cellulose has a hydrophobe weight percent substitution of 0.4 to 2.0.

7. Thickener composition according to any of claims 4 to 6, wherein the aryl residue is a phenyl group.

8. Thickener composition according to any of claims 2 to 7, wherein the hydrophobically modified cellulose derivative has a molecular weight $M_W$ of 10 000 to 300 000.

9. Thickener composition according to claim 7, wherein the hydrophobically modified cellulose derivative has a molecular weight $M_W$ of 10 000 to 100 000.

10. Thickener composition according to any of claims 1 to 9, wherein the combination of associative thickeners contains at least one synthetic thickener.

11. Thickener composition according to claim 10, wherein the synthetic thickener is a hydrophobically modified polyethylene glycol or a polyurethane associative thickener.

12. Thickener composition according to claim 11, wherein the hydrophobically modified polyethylene glycol is a hydrophobically modified poly(acetal-polyether) and the polyurethane associative thickener is a hydrophobically modified ethoxylated urethane block copolymer.

13. Thickener composition according to any of claims 1 to 12, wherein the combination of associative thickeners contains two thickeners.

14. Thickener composition according to any of claims 1 to 13, wherein the hydrophobically modified cellulose derivative or the hydrophobically modified guar derivative is present in a relative amount of not more than 30%, based on the weight of the combination of associative thickeners.

15. Thickener composition according to any of claims 1 to 14 wherein the hydrophobically modified cellulose derivative or the hydrophobically modified guar derivative is present in a relative amount of at least 10% by weight, based on the weight of the combination of associative thickeners.

16. Thickener composition according to any of claims 1 to 15, additionally containing at least one solvent.

17. Thickener composition according to claim 16, wherein the solvent is water or a mixture of water and at least one organic solvent.

**18.** Thickener composition according to claim 17, wherein the organic solvent is butyl glycol.

**19.** Thickener composition according to any of claims 16 to 18, wherein the combination of associative thickeners is in the form of a 20 wt.-% solution.

**20.** Thickener composition according to any of claims 1 to 19, wherein at least one associative thickener is physically separated from the other associative thickener(s).

**21.** Aqueous protective coating composition containing a thickener composition according to any of claims 1 to 20.

**22.** Aqueous protective coating composition according to claim 21, wherein the aqueous protective coating composition is a pigment/extender-free coating.

**23.** Aqueous protective coating composition according to claim 21, wherein the aqueous protective coating composition is a paint having a pigment/volume ratio of not more than 55%.

**24.** Aqueous protective coating composition according to claim 23, wherein the aqueous protective coating composition is a paint having a pigment/volume ratio of not more than 45%.

**25.** Aqueous protective coating composition according to claim 23 or 24, wherein the aqueous protective coating composition is a high gloss emulsion paint, semi-gloss emulsion paint, egg shell gloss paint or a sheen paint.

**26.** Aqueous protective coating composition according to any of claims 21 to 25, wherein the paint is based on an acrylic latex, a styrene-acrylic latex, a vinyl-acrylic latex or a vinylacetate copolymer latex.

**27.** Use of an associative thickener for the preparation of a thickener composition as claimed in any of claims 1 to 20 or for the preparation of an aqueous protective coating composition according to any of claims 21 to 26.

**28.** Coated product, comprising a coating made from the aqueous protective coating composition of any of claims 21 to 26.

**European Patent Office**

**EUROPEAN SEARCH REPORT**

Application Number

EP 98 12 0191

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO 94 06840 A (BEROL NOBEL AB ;ASKENBOM ANNELIE (SE); BOSTROEM PETER (SE); GOTTBE) 31 March 1994<br><br>* claims 1-10; examples 6,7 * | 1-3, 10-12, 16,17, 21,23, 24,26-28 | C09D7/00<br>C08L5/14<br>C08L1/28 |
| A | US 5 504 123 A (PARTAN III EMMETT M) 2 April 1996<br>* column 1, line 60 - line 67 *<br>* column 2, line 30 - line 67 *<br>* column 3, line 1 - line 67 *<br>* column 4, line 45 - line 47 * | 1-9,21, 26-28 | |
| A | EP 0 426 086 A (AQUALON CO) 8 May 1991<br>* claims 1-10 * | 1-3 | |

TECHNICAL FIELDS
SEARCHED (Int.Cl.6)

C09D
C08L

The present search report has been drawn up for all claims

| Place of search | Date of completion of the search | Examiner |
|---|---|---|
| THE HAGUE | 9 April 1999 | Miller, A |

## ANNEX TO THE EUROPEAN SEARCH REPORT
## ON EUROPEAN PATENT APPLICATION NO.

EP 98 12 0191

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-1999

| Patent document cited in search report | | Publication date | Patent family member(s) | | Publication date |
|---|---|---|---|---|---|
| WO 9406840 | A | 31-03-1994 | SE | 501624 C | 03-04-1995 |
| | | | AT | 164173 T | 15-04-1998 |
| | | | AU | 672622 B | 10-10-1996 |
| | | | AU | 4836493 A | 12-04-1994 |
| | | | CN | 1084522 A,B | 30-03-1994 |
| | | | DE | 69317568 D | 23-04-1998 |
| | | | DE | 69317568 T | 09-07-1998 |
| | | | EP | 0660851 A | 05-07-1995 |
| | | | ES | 2114069 T | 16-05-1998 |
| | | | FI | 951027 A | 06-03-1995 |
| | | | JP | 2665569 B | 22-10-1997 |
| | | | JP | 8501329 T | 13-02-1996 |
| | | | NO | 950980 A | 14-03-1995 |
| | | | SE | 9202648 A | 16-03-1994 |
| | | | US | 5496908 A | 05-03-1996 |
| US 5504123 | A | 02-04-1996 | BR | 9505947 A | 23-12-1997 |
| | | | CA | 2165577 A,C | 21-06-1996 |
| | | | EP | 0718310 A | 26-06-1996 |
| | | | JP | 8231918 A | 10-09-1996 |
| | | | US | 5583214 A | 10-12-1996 |
| EP 0426086 | A | 08-05-1991 | US | 5120838 A | 09-06-1992 |
| | | | CA | 2028387 A | 01-05-1991 |
| | | | JP | 3223301 A | 02-10-1991 |
| | | | US | RE34904 E | 11-04-1995 |
| | | | US | 5124445 A | 23-06-1992 |

For more details about this annex : see Official Journal of the European Patent Office, No. 12/82